# FASCICULE DE BREVET EUROPEEN

(11) **EP 0 326 993 B1**
(45) Date de publication et mention de la délivrance du brevet: **27.10.1993**
(21) Numéro de dépôt: 89101549.7
(22) Date de dépôt: 30.01.1989
(51) Int. Cl.: G02B 6/42

(54) **Procédé d'alignement, notamment pour composants optiques**
Ausrichteverfahren, insbesondere für optische Bauteile
Alignment method, in particular for optical components

(30) Priorité: 04.02.1988 FR 8801299
(43) Date de publication de la demande: 09.08.1989
(73) Titulaire: ALCATEL CIT, 75008 Paris (FR)
(72) Inventeur: Mousseaux, Daniel, F-91120 Palaiseau (FR); Chevet, Bruno, F-75020 Paris (FR); Grard, Emmanuel, F-91240 Saint Michel sur Orge (FR)
(74) Mandataire: Weinmiller, Jürgen

(56) Documents cités:
- EP-A- 0 100 086
- EP-A- 0 178 390
- EP-A- 0 183 124
- US-A- 4 495 704
- US-A- 4 500 165

## Description

La présente invention concerne la réalisation d'un alignement précis et permanent.

On sait qu'un alignement permanent particulièrement précis est nécessaire pour assurer un couplage efficace entre certains composants optiques. Tel est le cas lorsque l'un au moins de ces composants est une fibre optique, et plus spécialement une fibre monomodale, et/ou un laser semi-conducteur. Quoique la présente invention puisse trouver application pour l'alignement de composants de natures diverses, on va examiner ci-après le cas où elle vise à réaliser le couplage d'une fibre optique monomodale à un autre composant, c'est-à-dire l'injection d'une lumière dans une telle fibre ou la réception d'une lumière amenée par cette fibre.

Une telle lumière est généralement modulée et elle porte des informations dont la fibre assure la transmission. Elle est habituellement produite par un laser semi-conducteur, et elle est détectée par une diode photosensible également constituée d'une pastille semi-conductrice. De tels composants optiques, et, plus particulièrement ici, optoélectroniques, sont généralement fixés sur une embase rigide. Le couplage optique durable d'une fibre à un tel composant est réalisé par l'intermédiaire d'une lentille formée sur l'extrémité de la fibre. Il nécessite d'abord un positionnement précis de cette extrémité par rapport à ce composant, puis une fixation de la fibre par rapport à l'embase qui porte ce dernier. Sa réalisation est particulièrement délicate quand il s'agit d'injecter de la lumière dans une fibre monomodale car la position réelle de la fibre doit alors s'écarter de moins de quelques centaines de nanomètres de la position optimale, au moins dans les directions transversales. Si elle s'en écarte davantage le rendement de couplage n'est plus acceptable. Un écart de 100 nm peut par exemple faire passer les pertes de couplage de 0 à 1 dB.

On sait réaliser un réglage de position, ou "positionnement", correct de l'extrémité de la fibre grâce à des micromanipulateurs, par exemple du type piézoélectrique, en se guidant sur les variations du rendement de couplage optique. On peut par exemple réaliser d'abord un positionnement approximatif de la fibre, puis faire émettre de la lumière par l'émetteur laser fixé sur l'embase, et mesurer la quantité de lumière injectée dans la fibre. On commande alors les micromanipulateurs jusqu'à ce que cette quantité soit maximale. Il peut être préférable d'injecter de la lumière dans la fibre à distance de son extrémité à positionner, et d'utiliser l'émetteur laser comme une diode réceptrice. Le positionnement correct est obtenu quand la quantité de lumière reçue par cet émetteur est maximale.

Mais, lorsque la position optimale a été obtenue, il est difficile de fixer la fibre à l'embase de manière à conserver définitivement cette position. Il faut pour cela résoudre deux problèmes. L'un est que l'opération de fixation elle-même, par exemple par soudure, n'entraîne pas de déplacement gênant de la fibre. L'autre est que la position de la fibre reste stable ultérieurement au cours du temps, notamment en présence de variations de température.

On connaît un procédé d'alignement applicable au couplage d'un premier et d'un deuxième composants constitués par une fibre optique et un laser semi-conducteur. Ce procédé vise à résoudre les deux problèmes indiqués ci-dessus. Avant de le décrire de manière spécifique on va tout d'abord indiquer certaines opérations qui lui sont communes quant à leurs buts avec le procédé selon l'invention :
- Orientation, positionnement relatifs au moins longitudinal desdits premier et deuxième composants respectivement par rapport à une première et à une deuxième embase (EF, EL) présentant chacune une face transversale avant (RF, RL) constituant une face de réglage transversales de cette embase,
- fixation permanente desdits premier et deuxième composants sur lesdites première et deuxième embases, respectivement,
- orientation et positionnement préalables desdites première et deuxième embases pour mettre leurs dites faces de réglage transversales en regard l'une de l'autre,
- mise en appui mutuel des deux dites faces de réglage transversales avec application d'une force d'appui longitudinale (F1),
- réglage transversal après ladite opération de mise en appui, pour régler la position transversale mutuelle des deux dits composants par application, à au moins une dite embase, de forces de réglage transversales qui ont une limite mais qui suffisent pour provoquer des glissements mutuels des deux dites faces de réglage,
- et fixation des embases après ladite opération de réglage transversal, pour fixer lesdites embases l'une à l'autre de manière permanente.

Ce procédé connu, est décrit dans le document de brevet européen EP-A-0 183 124. Les deux dites embases coopérent, dans ce procédé connu, avec une pièce intermédiaire qui présente elle aussi deux faces de réglage transversales, de sorte que sont formées deux paires de telles faces, chaque paire étant constituée de deux faces glissant l'une contre l'autre au cours du réglage. Une paire est utilisée pour un premier positionnement avant son blocage (fixation mutuelle des deux faces) par soudure, l'autre pour un deuxième positionnement éventuel avant son blocage à l'aide de deux vis qui lui appliquent des forces d'appui longitudinal.

Ce procédé connu présente notamment l'inconvénient que ladite opération de fixation des embases (par soudure ou par serrage de vis) entraîne des déplacements parasites d'un composant (la fibre optique à coupler) par rapport à l'autre (le laser semi-conducteur, et qu'une fraction gênante de ces déplacements ne peut être prévue et ne peut donc être compensée par avance lors de ladite opération de réglage transversal.

La présente invention a pour but de permettre de réaliser de manière simple et sûre un alignement permanent plus précis que précédemment, et notamment, un couplage sensiblement optimal d'une fibre optique.

Elle a plus particulièrement pour but de diminuer les risques de déplacement parasite d'un composant par rapport à l'autre lors de la fixation des embases.

Le procédé selon l'invention comporte les opérations communes précédemment mentionnées. Par rapport au procédé connu précédemment mentionné, il est caractérisé par le fait que ladite force d'appui est appliquée de manière commandable, cette force présentant, pendant ladite opération de réglage transversal, une première valeur (F1) suffisamment petite pour que des forces de frottement qu'elle oppose auxdits glissements mutuels des deux faces de réglage restent inférieures à ladite limite des forces de réglage transversales,
et par le fait qu' entre cette opération de réglage transversal et ladite opération de fixation des embases il est prévu une opération de renforcement d'appui par augmentation de ladite force d'appui jusqu'à une deuxième valeur (F2) supérieure à ladite première valeur pour obtenir des forces de frottement augmentées supérieures à ladite limite des forces de réglage transversales et suffisantes pour empêcher un déplacement transversal mutuel desdites embases susceptible d'être induit par cette opération de fixation des embases, cette augmentation étant suffisamment progressive pour ne pas induire elle-même de déplacement transversal mutuel desdites embases.

De préférence lesdites embases sont métalliques et au moins ladite opération de fixation des embases est effectuée à l'aide d'impulsions brèves d'un rayonnement localisé et énergétique pour former des points de soudure résistants tout en induisant seulement des forces parasites petites au moins selon lesdites directions transversales. Il est connu que de telles impulsions peuvent être fournies par un laser YAG.

De préférence les deux dites embases sont des pièces massives constituées d'un même métal à faible coefficient de dilatation thermique et à haute température de fusion. Ce métal est par exemple un alliage Fe, Ni, Co. On évite ainsi des déformations gênantes qui pourraient se produire lors de variations de température et/ou au cours du temps.

De préférence encore lesdites faces de réglage avant des deux dites embases sont planes et polies de manière à glisser l'une contre l'autre à frottement doux.

De préférence encore lesdites faces de réglage des deux dites embases restent sensiblement coextensives pendant ladite opération de réglage transversal et leur surface de contact présente, dans le cas du couplage d'une fibre optique, deux dimensions supérieures à 0,2 mm, de manière à assurer un bon guidage de ces deux embases lors du réglage transversal. Dans ce cas ladite face de réglage est par exemple carrée et la longueur de son côté est comprise entre 1 et 20 mm environ, les dites première et deuxième valeurs de la force d'appui étant comprises, par exemple, entre 0,1 et 1 daN et entre 2 et 20 daN, environ.

Les deux embases peuvent présenter par exemple des formes générales voisines de deux prismes à génératrices longitudinales et à sections carrées coextensives.

Elles présentent de préférence chacune un pied élargi bilatéralement parallèlement à une face porteuse portant ledit composant et à distance de cette face pour constituer deux épaulements sur deux bords latéraux de ladite face de réglage, desdits points de soudure étant réalisés sur ladite face porteuse et sur lesdits épaulements sans changement d'orientation dudit rayonnement. On obtient ainsi facilement une fixation mécaniquement résistante avec un apport minimal d'énergie, ce qui limite encore les risques de déformation.

De préférence encore ladite force d'appui est engendrée à l'aide d'un dispositif de réglage comportant :
- une première structure munie d'un premier support d'embase pour porter ladite première embase,
- une deuxième structure munie de moyens pour l'immobiliser par rapport à ladite première structure, et d'un deuxième support d'embase pour porter ladite deuxième embase,
- l'une des deux dites structures étant une structure d'appui dans laquelle ledit support d'embase est un chariot d'appui, cette structure comportant
- des moyens de guidage longitudinal dudit chariot d'appui,
- un ressort d'appui pour appliquer ladite force d'appui audit chariot d'appui,
- une pièce d'appui déplaçable constituant un appui pour ledit ressort d'appui,
- et des moyens de déplacement de ladite pièce d'appui déplaçable pour faire passer progressivement cette pièce d'une position de réglage à une position de fixation d'embases dans lesquelles ledit ressort d'appui engendre lesdites première et deuxième valeurs de ladite force d'appui, respectivement,
- l'une au moins des deux dites structures étant une structure de réglage munie de moyens de réglage de la position d'un dit support d'embase selon au moins une direction transversale.

Un tel dispositif peut être utilisé pour la réalisation de nombreux alignements, notamment des couplages optiques.

Il porte de préférence, dans le cas d'un tel couplage, des moyens pour mesurer facilement le rendement de ce couplage pendant les dites opérations de réglage.

De préférence encore, dans le cas du couplage d'une fibre optique, le procédé comporte en outre les opérations suivantes :
- avant ladite opération de mise en appui mutuel desdites faces de réglage, formation d'une rainure de centrage à section en Vé dans une face porteuse de ladite première embase,
- introduction d'un tronçon de ladite fibre dans un conduit de fibre,
- et appui dudit conduit de fibre dans ladite rainure de centrage pour assurer l'orientation de ce tronçon de fibre.

Ledit conduit de maintien présente par exemple la forme d'un tube constitué d'un alliage Fe, Ni, Co à faible dilatation. Il est appliqué dans ladite rainure de centrage par un ressort à lame, puis fixé aux bords de cette rainure par quatre points de soudure avant ladite opération de réglage transversal.

A l'aide des figures schématiques ci-joints on va décrire plus particulièrement ci-après, à titre d'exemple non limitatif, comment l'invention peut être mise en oeuvre avec application des dispositions indiquées précédemment. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

Les figures 1 à 5 représentent des vues en perspective éclatée de quelques pièces essentielles utilisées à des étapes successives du procédé selon l'invention.

La figure 6 représente une vue de dessus à échelle agrandie de deux embases fixées l'une à l'autre.

La figure 7 représente une vue plus détaillée de côté avec coupe médiane longitudinale partielle d'un dispositif utilisé pour la mise en oeuvre de ce procédé et incorporant ou portant les mêmes pièces essentielles.

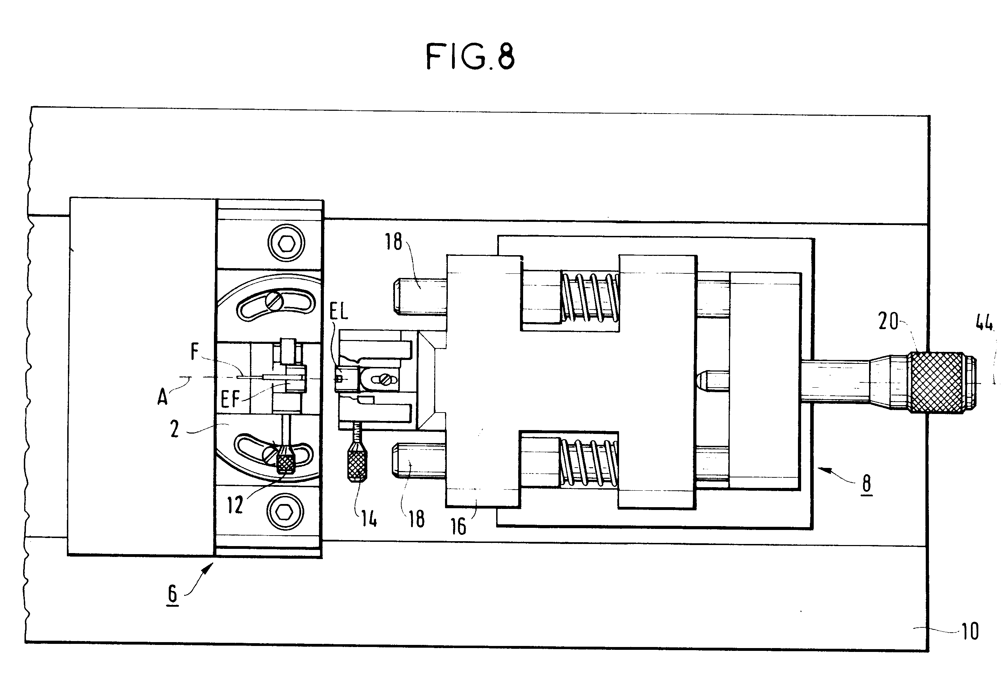

La figure 8 représente une vue de dessus du même dispositif.

Dans l'exemple donné, ledit deuxième composant est une diode laser L fixée à l'avant de la face supérieure d'une embase de laser EL présentant une face de réglage avant RL. Cette embase de laser constitue ladite deuxième embase.

Ledit premier composant est une fibre optique monomode F dont un tronçon de maintien proche de son extrémité de couplage est fixé dans un conduit de fibre CF. Ce conduit est lui même fixé par un ressort à lame MF dans une rainure de centrage en Vé VF creusée dans la face supérieure d'une embase de fibre EF perpendiculairement à la face de réglage avant RF de cette embase. Cette face est cachée sur les figures et présente les mêmes forme et dimensions que la face RL. Le ressort MF est fixé par brasage sur la face supérieure de l'embase EF qui constitue ladite première embase.

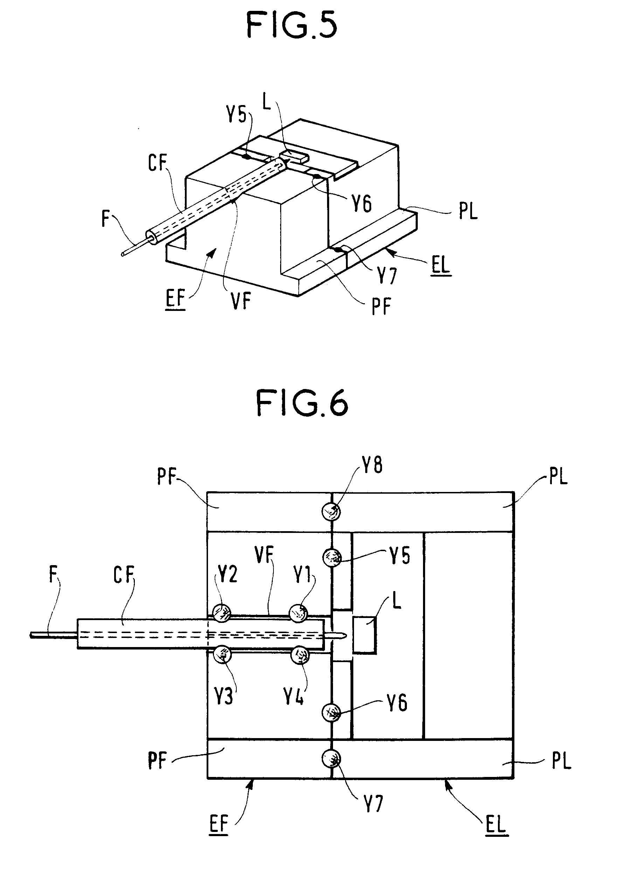

Toutes ces pièces sont consommées lors de la réalisation de chaque tête laser. Une telle tête comporte ces pièces fixées définitivement les unes aux autres, sauf le ressort à lame MF qui a été brasé sur la face supérieure de l'embase EF, et qui en a été ensuite enlevé (voir fig.5).

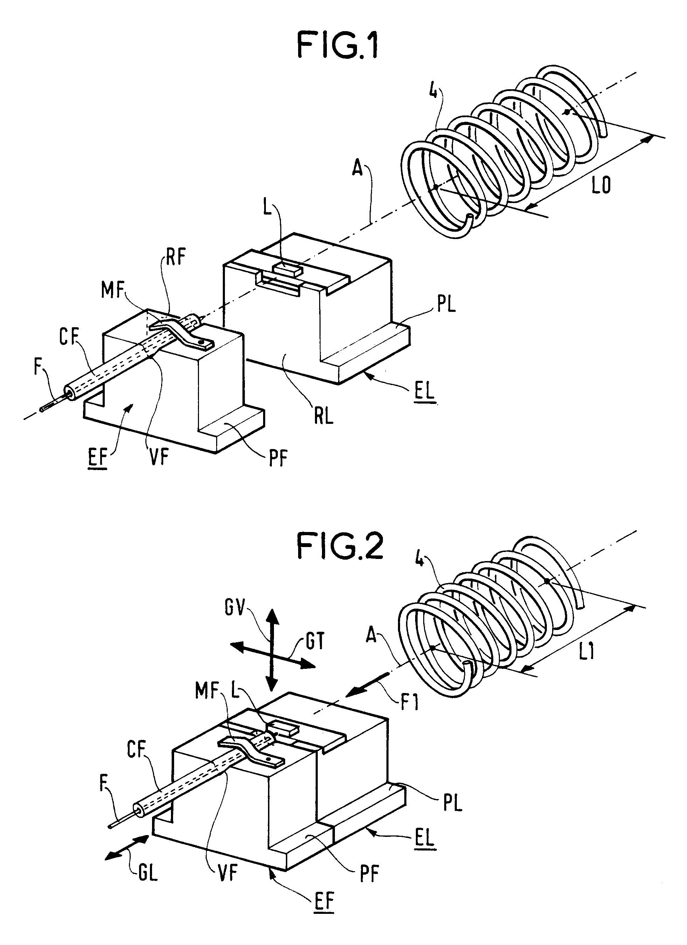

Ladite direction longitudinale est celle de l'axe A de la fibre F. Elle est horizontale. Lesdites directions transversales sont la direction verticale, selon une flèche GV de la figure 2, et une direction horizontale qui est perpendiculaire à l'axe A selon une flèche GT et que l'on appelera ci-après simplement direction transversale.

Lesdites faces porteuses des deux embases EL et EF sont leurs faces supérieures. Leurs dits pieds élargis sont représentés en PL et PF respectivement.

La figure 1 montre les deux embases EL et EF après leur mise en place et leur fixation dans une structure porte fibre et une structure porte laser non représentées ici qui constituent lesdites première et deuxième structures et qui font parties d'un dispositif qui sera décrit plus loin. Cette mise en place met les deux faces de réglage en regard et constitue une première opération d'orientation car elle impose aux deux faces de réglage RL et RF d'être exactement verticales.

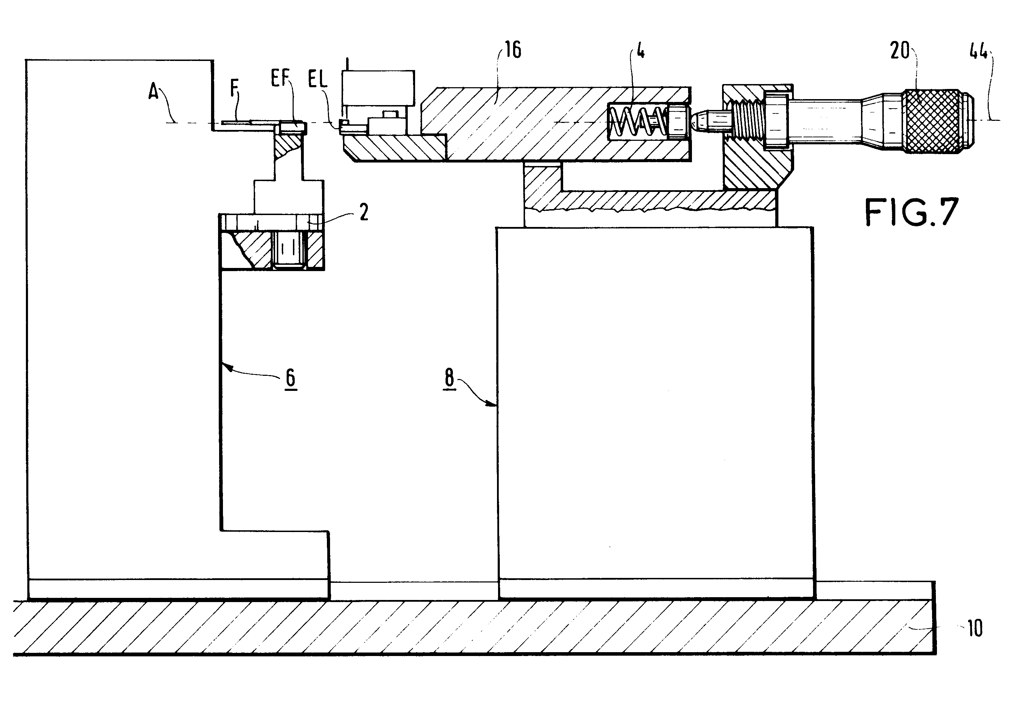

Elle est suivie (voir Fig.2) d'une deuxième opération d'orientation qui est réalisée par une première mise en appui mutuel de ces deux faces de réglage par déplacement longitudinal mutuel des deux dites structures, et en n'exerçant qu'une force d'appui minime, alors que l'embase EF est montée sur une platine de rotation 2 (voir fig.7) qui peut tourner librement autour d'un axe vertical et qui est bloquée ensuite.

Pendant ces opérations ledit ressort d'appui 4, qui est coaxial aux deux faces de réglage, présente une longueur de repos L0 (voir fig.1).

Conformément à la figure 2 les deux faces de réglage sont alors mises en appui mutuel avec ladite première valeur de la force d'appui, qui est représentée par une flèche F1 et qui est appliquée par l'intermédiaire du ressort d'appui comprimé 4. Ce dernier présente donc comme représenté une longueur L1 inférieure à L0.

Le conduit de fibre CF est déplacé longitudinalement à frottement modéré dans la rainure VF selon une flèche GL par des moyens non représentés pour assurer un premier couplage optique maximal. Des moyens bien connus non représentés sont utilisés pour mesurer ce couplage pendant cette opération de réglage de position longitudinale.

L'obtention d'un couplage maximal est permis par le fait que pendant la même période, on procéde à l'aide de deux organes de réglage vertical et transversal incorporés dans le dispositif qui sera décrit plus loin, à des déplacements par glissement tendant à accroître ce couplage. Ces déplacements verticaux et transversaux sont représentés par les flèches GV et GT.

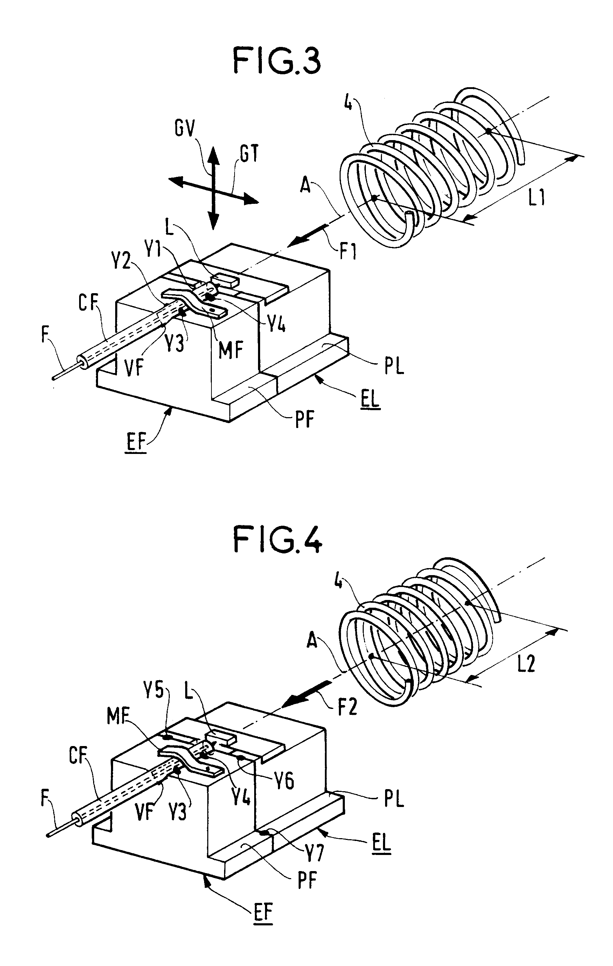

Lorsque ce premier couplage maximal a été obtenu, on donne quatre coups de laser YAG pour réaliser deux points de soudure tels que Y3 et Y4 de chaque côté de ce conduit pour fixer le conduit CF sur l'embase EF. Deux de ces points sont cachés sur la figure. Ils sont symétriques des points Y3 et Y4. Après cette opération de fixation du conduit CF à l'embase EF, le couplage optique est fortement diminué. On effectue alors, après refroidissement complet, de nouveaux réglages verticaux et transversaux selon les flèches GV et GT jusqu'à obtenir un deuxième couplage optique maximal. Lorsque celui-ci est atteint, et conformément à la figure 4, on augmente progressivement la force d'appui qui prend sa dite deuxième valeur F2, le ressort 4 prenant une longueur L2 inférieure à L1. Puis on donne verticalement quatre coups de laser YAG pour réaliser quatre points de soudure tels que Y5, Y6 et Y7 répartis sur le bord de la surface de contact des deux embases EL et EF, deux points Y5 et Y6 sur les faces supérieures, et deux sur les pieds élargis PL et PF, l'un de ces points étant le point Y7, l'autre étant caché sur la figure et symétrique du point Y7.

Conformément à la figure 5 le ressort MF est enlevé et on obtient un sous ensemble qui peut être monté dans un boîtier pour constituer une tête laser utilisable dans un système de télécommunications.

Conformément aux figures 6 et 7 lesdites structures porte-fibre 6 et porte-laser 8 constituent en même temps lesdites structures de réglage 6 et d'appui 8, respectivement. Elles peuvent d'abord coulisser longitudinalement sur une base 10 sur laquelle elles peuvent être ensuite immobilisées.

L'embase EF est bloquée par une vis 12 sur ladite platine de rotation 2 qui constitue ledit support d'embase de la structure porte-fibre 6.

L'embase de laser EL est bloquée par une vis 14 sur un chariot d'appui 16 de la structure porte-laser 8. Ce chariot constitue ledit support d'embase de cette structure.

Les déplacements longitudinaux de ce chariot par rapport à cette structure sont guidés par deux axes 18 et sont entraînés par une vis micrométrique 20 qui comprime un ressort hélicoîdal 4, qui constitue ledit ressort d'appui, par l'intermédiaire d'une pièce d'appui 22. Cette vis, ce ressort et cette pièce sont disposés selon un même axe longitudinal 44 qui passe par le centre des faces de réglage carrées des deux embases EL et EF.

La structure porte fibre 6 comporte des moyens de réglage des positions verticale et traversale de l'embase 2. Ces moyens non représentés comportent de manière connues des vis micrométriques agissant sur des éléments guidés selon des axes vertical et transversal.

Les pièces massives du dispositif sont réalisées en fonte pour assurer un amortissement des vibrations.

Le procédé décrit ci-dessus présente notamment les avantages suivants :
- Les embases étant fortement appuyées l'une contre l'autre au moment de leur fixation au laser YAG, le mouvement relatif parasite de ces deux embases est très faible et la perte de couplage peut être donc inférieure à 0,5 dB.
- L'échauffement très localisé, obtenu par utilisation de la soudure YAG, permet de suivre constamment l'évolution du couplage en émission laser lors des phases d'assemblage.
- L'utilisation d'une soudure métal-métal à très haut point de fusion est une garantie contre les phénomènes de "fluage" qui, dans des brasures à plus bas point de fusion, peuvent entraîner des évolutions du couplage au cours du temps en présence de contraintes thermiques.

Les assemblages ainsi réalisés ont été testés à des températures de l'ordre de 100° C, sur des durées de l'ordre d'une centaine d'heures, sans montrer d'évolution significative du couplage optique.

## Revendications

1. Procédé d'alignement notamment pour composants optiques pour assurer un alignement précis et permanent d'un premier et d'un deuxième composants (F, L) selon une direction longitudinale, ce procédé comportant les opérations suivantes :
- orientation et positionnement relatifs au moins longitudinal desdits premier et deuxième composants respectivement par rapport à une première et à une deuxième embase (EF, EL) présentant chacune une face transversale avant (RF, RL) constituant une face de réglage transversale de cette embase,
- fixation permanente desdits premier et deuxième composants sur lesdites première et deuxième embases, respectivement,
- orientation et positionnement préalables desdites première et deuxième embases pour mettre leurs dites faces de réglage transversales en regard l'une de l'autre,
- mise en appui mutuel des deux dites faces de réglage transversales avec application d'une force d'appui longitudinale (F1),
- réglage transversal après ladite opération de mise en appui, pour régler la position transversale mutuelle des deux dits composants par application, à au moins une dite embase, de forces de réglage transversales qui ont une limite mais qui suffisent pour provoquer des glissements mutuels des deux dites faces de réglage,
- et fixation des embases après ladite opération de réglage transversal, pour fixer lesdites embases l'une à l'autre de manière permanente,
ce procédé étant caractérisé par le fait que ladite force d'appui longitudinale est appliquée de manière commandable, cette force présentant, pendant ladite opération de réglage transversal, une première valeur (F1) suffisamment petite pour que des forces de frottement qu'elle oppose auxdits glissements mutuels des deux faces de réglage restent inférieures à ladite limite des forces de réglage transversales,
- et par le fait qu' entre cette opération de réglage transversal et ladite opération de fixation des embases il est prévu une opération de renforcement d' appui longitudinal par augmentation de ladite force d' appui longitudinale jusqu'à une deuxième valeur (F2) supérieure à ladite première valeur pour obtenir des forces de frottement augmentées supérieures à ladite limite des forces de réglage transversales et suffisantes pour empêcher un déplacement transversal mutuel desdites embases susceptible d'être induit par cette opération de fixation des embases, cette augmentation étant suffisamment progressive pour ne pas induire elle-même un déplacement transversal mutuel desdites embases (EF, EL).

2. Procédé selon la revendication 1, dans lequel lesdites embases (EL, EF) sont constituées d'un matériau soudable et ladite opération de fixation des embases est effectuée à l'aide d'impulsions brèves d'un rayonnement localisé et énergétique pour former des points de soudure résistants tout en induisant seulement des forces parasites petites au moins selon des directions transversales (GV, GT).

3. Procédé selon la revendication 2, dans lequel desdites impulsions de rayonnement sont celles d'un laser.

4. Procédé selon la revendication 2, caractérisé par le fait que lesdites faces de réglage des deux dites embases (EL, EF) restent sensiblement coextensives durant ladite opération de réglage transversal.

5. Procédé selon la revendication 2, caractérisé par le fait que les deux dites embases sont des pièces massives constituées d'un même métal à faible coefficient de dilatation thermique et à haute température de fusion.

6. Procédé selon la revendication 2, caractérisé par le fait que chacune des deux dites embases (EL, EF) présente un pied élargi (PL, PF) bilatéralement parallèlement à une face porteuse portant ledit composant et à distance de cette face pour constituer deux épaulements sur deux bords latéraux de ladite face de réglage, desdits points de soudure (Y5, Y6, Y7) étant réalisés sur ladite face porteuse et sur lesdits épaulements sans changement d'orientation dudit rayonnement.

7. Procédé selon la revendication 1, caractérisé par le fait que ladite force d'appui est engendrée à l'aide d'un dispositif de réglage comportant
- une première structure (6) munie d'un premier support d'embase (2) pour porter ladite première embase (EF),
- une deuxième structure (8) munie de moyens (10) pour l'immobiliser par rapport à ladite première structure, et d'un deuxième support d'embase (16) pour porter ladite deuxième embase (EL),
- l'une des deux dites structures (8) étant une structure d'appui dans laquelle ledit support d'embase est un chariot d'appui (16), cette structure comportant
- des moyens de guidage longitudinal (18) dudit chariot d'appui (16),
- un ressort d'appui (4) pour appliquer ladite force d'appui audit chariot d'appui (16),
- une pièce d'appui déplaçable (22) constituant un appui pour ledit ressort d'appui,
- et des moyens de déplacement (20) de ladite pièce d'appui déplaçable (22) pour faire passer progressivement cette pièce d'une position de réglage à une position de fixation d'embases dans lesquelles ledit ressort d'appui (4) engendre lesdites première et deuxième valeurs de ladite force d'appui, respectivement,
- l'une au moins des deux dites structures (6) étant une structure de réglage munie de moyens de réglage de la position d'un dit support d'embase selon au moins une direction transversale.

8. Procédé selon la revendication 1, dans lequel lesdits premier et deuxième composants sont respectivement une fibre optique (F) et un composant optique (L) dont l'alignement doit assurer le couplage, au moins ladite opération de réglage transversal comportant une mesure de ce couplage.

9. Procédé selon la revendication 8, caractérisé par le fait que ladite opération d'orientation comporte elle même les opérations suivantes :
- avant ladite opération de mise en appui mutuel desdites faces de réglage (RL, RF), formation d'une rainure de centrage à section en Vé (VF) dans une face porteuse de ladite première embase (EF),
- introduction d'un tronçon de ladite fibre (F) dans un conduit de fibre (CF),
- et appui dudit conduit de fibre dans ladite rainure de centrage pour assurer l'orientation de ce tronçon de fibre.

## Claims

1. An alignment method in particular for optical components for the purpose of obtaining accurate and permanent alignment between a first component and a second component (F, L) along a longitudinal direction, said method comprising the following operations:
- orienting relative positioning at least longitudinally of said first and second components respectively in relation to first and second bases (EF, EL) each base having a transverse face in front (RF, RL) constituting a transverse adjustment face of the base;
- permanently fixing the said first and second components on the said first and second bases respectively;
- preliminary orienting and positioning of the said first and second bases to cause their said transverse adjustment faces to face one another;
- pressing said two transverse adjustment faces against each other by applying a longitudinal thrust force (F1);
- applying transverse adjustment after said operation of pressing said faces together, thereby adjusting the relative transverse positions of said two components by applying transverse adjustment forces to at least one of said bases, said forces being limited but sufficient to cause said two adjustment faces to slide over each other; and
- fixing the bases together after said operation of transverse adjustment in order to fix said bases together in permanent manner;
- said method being characterized by the fact that said longitudinal thrust force is applied in controllable manner, said thrust force having a first value (F1) during said operation of transverse adjustment, said first value being sufficiently small to ensure that the friction forces opposing said relative sliding of the two adjustment faces remain less than said limit on the transverse adjustment forces,
- and by the fact that between this operation of transverse adjustment and the said operation of fixing the bases, there is an operation of reinforcing the longitudinal thrust by increasing said longitudinal thrust force to a second value (F2) which is greater than said first value, thereby obtaining increased friction forces greater than the said limit on the transverse adjustment forces and sufficient for preventing mutual transverse displacement of the said bases susceptible to being induced by this operation of fixing of the bases, said increase being performed sufficiently progressively to itself avoid inducing mutual transverse displacement of said bases (EF, EL);

2. A method according to claim 1, in which said bases (EL, EF) are made of a weldable material, and in which said operation of fixing the bases together is performed by means of short pulses of localized high-energy radiation in order to form strong weld spots while inducing interfering forces which are small only, at least along said transverse directions (GV, GT).

3. A method according to claim 2, in which said pulses of radiation are laser pulses.

4. A method according to claim 2, characterized by the fact that said adjustment faces of said two bases (EL, EF) remain substantially coextensive during said operation of transverse adjustment.

5. A method according to claim 2, characterized by the fact that said two bases are solid pieces made of the same metal having a low coefficient of thermal expansion and a high melting temperature.

6. A method according to claim 2, characterized by the fact that each of said two bases (EL, EF) has bilateral flanges (PL, PF) of increased width running parallel to a carrier face carrying said component and at a distance from said face in order to constitute two shoulders on two side edges of said adjustment face, said weld spots (Y5, Y6, Y7) being made both on said carrier face and on said shoulders without altering the orientation of said radiation.

7. A method according to claim 1, characterized by the fact that said thrust force is generated by means of an adjustment device comprising:
- a first structure (6) provided with a first base support (2) for supporting said first base (EF);
- a second structure (8) provided with means (10) for holding it stationary relative to said first structure, and with a second base support (16) for carrying said second base (EL);
- one of said two structures (8) being a thrust structure in which said base support is a thrust carriage (16), said structure comprising:
longitudinal guide means (18) for guiding said thrust carriage (16);
a thrust spring (4) for applying said thrust force to said thrust carriage (16);
a displaceable thrust piece (22) constituting a bearing surface for said thrust spring; and
means (20) for displacing said displaceable thrust piece (22) for causing said piece to move progressively from a base adjustment position to a base fixing position with said thrust spring (4) generating said first and second thrust force values respectively in said positions;
- at least one of said two structures (6) being an adjustment structure provided with means for adjusting the position of one of said base supports in at least one transverse direction.

8. A method according to claim 1, in which said first and second components are respectively an optical fiber (F) and an optical component (L) which are to be aligned for coupling purposes, with at least said operation of transverse adjustment including measuring said coupling.

9. A method according to claim 8, characterized by the fact that said orientation operation itself comprises the following operations:
prior to said operation in which said adjustment faces (RL, RF) are pressed against each other, a V-section centering groove (VF) is formed in a carrying face of said first base (EF);
a length of said fiber (F) is inserted in a fiber duct (CF); and
said fiber duct is pressed into said centering groove in order to orient said length of fiber.

## Patentansprüche

1. Ausrichtverfahren insbesondere für optische Bauteile, um eine präzise und dauerhafte Ausrichtung eines ersten und eines zweiten Bauteils (F, L) in einer Längsrichtung zu erreichen, wobei dieses Verfahren die folgenden Schritte aufweist:
- relative Ausrichtung und Positionierung des ersten und zweiten Bauteils zumindest in Längsrichtung in Bezug auf einen ersten bzw. einen zweiten Sockel (EF, EL), die je eine vordere Querfläche (RF, RL) aufweisen, welche eine transversale Einstellfläche des jeweiligen Sockels bildet,
- dauerhafte Befestigung des ersten und zweiten Bauteils auf dem ersten bzw. zweiten Sockel,
- grobe Ausrichtung und Positionierung des ersten und zweiten Bauteils, um ihre transversalen Einstellflächen einander gegenüber anzuordnen,
- Anlegen der beiden transversalen Einstellflächen aneinander unter Anwendung eines Drucks in Längsrichtung (FI),
- transversale Einstellung nach dem Anlegen, um die gegenseitige Querposition der beiden Bauteile durch Anwendung von Quer-Einstellkräften zumindest auf einen Sockel einzustellen, die begrenzt sind, aber ausreichen, um ein gegenseitiges Gleiten der beiden Einstellflächen hervorzurufen,
- und Befestigung der Sockel nach der transversalen Einstellung, um die Sockel dauerhaft aneinander zu befestigen, wobei dieses Verfahren dadurch gekennzeichnet ist, daß der Druck in steuerbarer Weise angewandt wird, wobei dieser Druck während der Quereinstellung einen ersten Wert (F1) annimmt, der klein genug ist, daß Reibungskräfte, die er dem gegenseitigen Gleiten der beiden Einstellflächen entgegensetzt, unterhalb der Grenze der Quereinstellkräfte bleiben, und dadurch, daß zwischen dieser Operation der Quereinstellung und der Operation der Befestigung der Sockel eine Operation der Verstärkung des Drucks durch Erhöhung der Druckkraft bis auf einen zweiten Wert (F2) vorgesehen ist, der höher ist als der erste Wert, um erhöhte Reibungskräfte zu erhalten, die höher sind als die Grenze der Quer-Einstellkräfte und ausreichend, um eine gegenseitige Querverschiebung der Sockel zu verhindern, die durch diese Operation der Befestigung der Sockel eingeführt werden könnte, wobei diese Erhöhung progressiv genug ist, um nicht selbst eine gegenseitige Querverschiebung der Sockel (EF, EL) zu bewirken.

2. Verfahren nach Anspruch 1, bei dem die Sockel (EL, EF) aus einem schweißbaren Material bestehen und der Schritt der Befestigung der Sockel mittels kurzer Impulse einer lokalisierten und energiereichen Strahlung durchgeführt wird, um widerstandsfähige Schweißpunkte zu bilden, während nur kleine parasitäre Kräfte zumindest entlang der Querrichtungen (GV, GT) eingeführt werden.

3. Verfahren nach Anspruch 2, bei dem die Strahlungsimpulse die eines Lasers sind.

4. Verfahren nach Anspruch 2, dadurch gekennzeichnet, daß die Einstellflächen der beiden Sockel (EL, EF) während des Schritts der transversalen Einstellung im wesentlichen koextensiv bleiben.

5. Verfahren nach Anspruch 2, dadurch gekennzeichnet, daß die beiden Sockel massive Teile bestehend aus dem gleichen Metall mit niedrigem Wärmeausdehnungskoeffizienten und mit hohem Schmelzpunkt sind.

6. Verfahren nach Anspruch 2, dadurch gekennzeichnet, daß jeder dieser beiden Sockel (EL, EF) einen zu beiden Seiten parallel zu einer das Bauteil tragenden Trägerfläche und entfernt von dieser Fläche erweiterten Fuß (PL, PF) aufweist, um zwei Schultern auf zwei Seitenrändern der Einstellfläche zu bilden, wobei Schweißpunkte (Y5, Y6, Y7) auf der Tragefläche und den Schultern hergestellt werden, ohne daß die Strahlungsrichtung geändert werden müßte.

7. Verfahren nach Anspruch 1, dadurch gekennzeichnet, daß der Druck mittels einer Einstellvorrichtung erzeugt wird, die aufweist:
- eine erste Struktur (6) mit einem ersten Sockelträger (2), um den ersten Sockel (EF) zu tragen,
- eine zweite Struktur (8) mit Mitteln (10), um sie in Bezug auf die erste Struktur festzulegen, und mit einem zweiten Sockelträger (16), um den zweiten Sockel (EL) zu tragen,
- wobei eine der Strukturen (8) eine Druckstruktur ist, in der der Sockelträger ein Druckwagen ist (16), wobei diese Struktur aufweist
- Längsführungsmittel (18) des Druckwagens (16),
- eine Druckfeder (4), um den Druck auf den Druckwagen (16) anzulegen,
- ein verschiebbares Druckteil (22), das ein Drucklager für die Druckfeder bildet,
- und Mittel (20) zur Verschiebung des verschiebbaren Druckteils (22), um dieses Teil progressiv von einer Einstellposition in eine Position der Befestigung der Sockel zu bringen, in der die Druckfeder (4) den ersten bzw. zweiten Wert des Drucks erzeugt,
- wobei mindestens eine der Strukturen (6) eine Einstellstruktur ist, die mit Mitteln zum Einstellen der Position eines der Sockelträger entlang mindestens einer Querrichtung versehen ist.

8. Verfahren nach Anspruch 1, bei der das erste bzw. das zweite Bauteil eine Lichtleitfaser (F) bzw. ein optisches Bauteil (L) ist, deren Ausrichtung die Kopplung bewirken soll, wobei mindestens der Schritt der Quereinstellung eine Messung dieser Kopplung enthält.

9. Verfahren nach Anspruch 8, dadurch gekennzeichnet, daß der Schritt der Ausrichtung selbst die folgenden Schritte enthält:
- vor dem Schritt des gegenseitigen Andrückens der Einstellflächen (RL, RF) wird eine Zentriernut mit V-Querschnitt (VF) in einer Tragefläche des ersten Sockels (EF) gebildet,
- ein Abschnitt der Faser (F) wird in eine Faserröhre (CF) eingeführt,
- und die Faserröhre wird in die Zentriernut gedrückt, um die Ausrichtung dieses Faserabschnitts zu bewirken.
